# EUROPEAN PATENT APPLICATION

(11) **EP 1 043 887 A1**
(43) Date of publication of application: **11.10.2000**
(21) Application number: 99201002.5
(22) Date of filing: 30.03.1999
(51) Int. Cl.: H04N 5/00, H04L 29/06, G06F 17/60

(54) **Method and apparatus for providing internet access through a television and telephone system**

(71) Applicant: World Callnet, Inc., London E14 9YT (GB)
(72) Inventor: Logue, William Stephen, Waverdon Gate, Milton Keynes, MK7 7SR (GB); Goodyer, Keith, Milton Keynes, Bucks, MK7 6JD (GB); Southgate, Christian, Northampton, Northants, NN2 6DJ (GB); Marshall, Ienan James Mackereth, Cambridge, CB1 3RZ (GB); Maw, Wayne, Waverdon Gate, Milton Keynes, MK7 7SR (GB)
(74) Representative: Bakkum, Ruben Joseph

(57) **Abstract**

There is disclosed a business process and method for providing "free" Internet service to clients to access email, join in chat groups and have current access to news and information, all through a television set. The inventive process provides a business model that provides a revenue stream for the Internet Service Provider (ISP) through the generation of local calling traffic and provides revenue in those jurisdictions where local calling is metered. There is further disclosed a network for connecting television sets to the Internet, particularly text-based email features, via a telephone hook up. A larger memory version can further provide graphical images. The present invention eliminates the need for personal computers (PCs) or similarly-functioning electronic hardware in order to provide Internet access and relates to a client-based television circuitry and software in combination with server software in order to implement such access.

## Description

### Technical Field of the Invention

The present invention provides a business process and method for providing "free" Internet service to clients to access email, join in chat groups and have current access to news and information, all through a television set. The inventive process provides a business model that provides a revenue stream for the Internet Service Provider (ISP) through the generation of local calling traffic and provides revenue in those jurisdictions where local calling is metered. The present invention further provides a network for connecting television sets to the Internet, particularly text-based email features, via a telephone hook up. The present invention eliminates the need for personal computers (PCs) in order to provide Internet access and relates to a client-based television circuitry and software in combination with server software in order to implement such access.

### Background of the Invention

The international universe of Internet Service Providers (ISPs) provides a means for individuals with personal computers (PC's) and a modem (means for dialing and accessing the ISP through a telephone line) to utilize TCP/IP (Transfer Control Protocol/Internet Protocol) protocols to access the full universe of the Internet. Such Internet access includes text-based email messaging. However, the TCP/IP protocols can only be used when the remote PC contains sufficient computational and storage (memory including RAM memory) capability to operate the TCP/IP protocols. It is estimated that the bare minimum RAM (random access memory) requirement for a PC to operate a TCP/IP protocol is least about 64 kilobytes, which are typically found only in personal computers.

The use of the Internet as a means for communication and retail and business transactions has required the use of expensive PCs with significant computing power and memory capabilities. While the cost of similarly-equipped PCs certainly has been decreasing, PC's have become faster and more powerful and have not been decreasing in prices as a result. Accordingly, PCs have not nearly reached the level of penetration in homes as have television sets, particularly in emerging countries (*e.g.*, continental Europe, Eastern Europe, China and India). Further, many countries outside of North America have local telephone service for individual residences but charge for such services on a metered or use basis. In such countries, the ability to provide free Internet communications services through a telephone connection without using an expensive PC would be of tremendous value to large segments of the population. The present invention was made to address that need and provide the hardware and software needed to sustain the provision of such a service.

One attempt to address the wide prevalence of television sets, as opposed to PCs, is a product called WebTV, recently purchased by Microsoft. The WebTV device is essentially a PC that is adapted to have Internet functions of any PC and without the rest of the PC functionality, such as other software applications. However, the software needed to send and receive email and to surf the Web with a browser is already contained within each WebTV device. The inclusion of such software and the needed memory to store it in each client WebTV device significantly adds to the cost of each device. Moreover, the memory of WebTV-like devices is limited without the ability to significantly upgrade memory capacity without difficulty. Therefore, any software upgrades for WebTV-like devices need to be individually downloaded and older models may not even have the memory capacity to handle programs having ever increasing amounts of RAN needs. Therefore, the present invention was made to address that need and provide a business model that can sustain the provision of such a service.

### Summary of the Invention

The present invention provides a method for providing Internet connectivity for a client via a television set that allows for revenue generation through metering connection times or through flat rate usage, comprising:
(a) providing the client a television set-based hardware component having software embedded therein for accessing a server through a dial-up connection, wherein the television set-based hardware component comprises a circuit having functionality of a CPU, ROM, RAM, video circuitry and a client modem;
(b) providing an ISP (Internet Service Provider) network comprising a server device, a modem concentrator and routers to connect to the Internet, wherein the server device comprises a central processing unit (CPU), and additional memory capabilities to augment the memory capabilities, wherein the modem concentrator is connected via a telephone connection to the client modem by a telephone network provided by a telephone service provider, and wherein the server device creates a virtual screen in its RAM memory and transmits any changes in its virtual screen to the client television set-based hardware component via the modem concentrator to the client modem;
(c) providing a revenue security means by having the server or the ISP control an access telephone number that is dialed by the modem means in the client's television circuitry; and
(d) determining client/user connection time to the server as a means for charging the client or as a means for revenue sharing with the telephone service provider.

Preferably, the method provides a means for encryptation of the server telephone number within the memory of the client hardware component. Most preferably, only the server can change the telephone dial up number located within each client hardware component, whereby the control of the client hardware dial up number insures that each hardware device sold will only be able to dial up the proper server so as to insure capturing the revenue stream from client interconnection time. Most preferably, the server element contains encryptation technology and the hardware component contains de-encryptation technology in order to properly decode those signals sent from the server.

Preferably, the circuit having functionality of a CPU, ROM, RAM, and video circuitry is manufactured by commercial manufacturers, such a Zilog (Digital TV controllers Z89300/Z90300) and others. Preferably, in a text embodiment, the chip contains from about 128 kbytes to about 640 kbytes of ROM in a graphical embodiment. Preferably, the chip contains from about 2 kbytes in a text embodiment to about 1000 kbytes in a graphical embodiment of RAM. Preferably, the video circuitry in the client hardware will provide an embedded software component comprising non-connected video screens, such as front-end means options and setting screens, software controlling the client modem having de-encryptation software that contains an ability to change dialing telephone numbers only by providing an encrypted signal from either the server or manual override. Preferably, the television circuitry device communicated to the server via the modem uses an ultrathin client protocol (UTCP) network communication protocol, which requires less memory and CPU capabilities that a TCP/IP protocol used to communicate messages in packets over the Internet. Most preferably, the UTCP provides a packetized system having four bytes wrapped before the data being sent and one byte after the data.

The present invention further provides a client hardware device for inclusion in or attachment to a television set, comprising:
(a) a chip having circuits providing functionality for a central processing unit (CPU), ROM, RAM, video override signals appropriate for the particular television set, and software embedded therein, wherein the software comprises connectivity software including non-connected video screens including connectivity options and setting screens, software for controlling a modem, software for accessing RAM, and pre-programmed default country options, default language options, default server telephone numbers and default guest user names; and
(b) a telephone line or a cable line modem connected to the chip to transmit and receive signals from and to the chip.

Preferably, the chip further comprises de-encryptation software that allows for changes in the programmed server telephone number to be change only upon receipt, from the server or from the client, of encrypted messages. Preferably, the amount of ROM is from about 128 kbytes in a text embodiment to about 500 kbytes in a graphical embodiment. Preferably, the amount of RAM is from about 2 kbytes in a text embodiment to about 1000 kbytes in a graphical embodiment. Preferably, the client hardware device further comprises a text input means. Most preferably, the text input means is selected from the group consisting of a keyboard connected by cable or through wireless transmission, a remote control device having either a letter or Asian character-based keypad and a selection means, or a pointing device capable of selecting letter, Asian characters or keystrokes of Asian characters on a screen, and a combination of redundant devices. Preferably, the software further comprises a means for converting screen text or pixel-based graphical images and receiving screen text or pixel-based graphical images wrapped into an ultrathin client transfer protocol for transmission via the modem.

The present invention further provides a circuit having software embedded therein, wherein the circuit comprises a central processing unit (CPU), ROM, RAM, and video circuitry, and software embedded therein, wherein the software comprises connectivity software including non-connected video screens including connectivity options and setting screens, software for controlling a modem, software for accessing RAM, and pre-programmed default country options, default language options, default server telephone numbers and default guest user names.

Preferably, the chip further comprises de-encryptation software that allows for changes in the programmed server telephone number to be change only upon receipt, from the server or from the client, of encrypted messages. Preferably, the amount of ROM is from about 128 kbytes in a text embodiment to about 500 kbytes in a graphical embodiment. Preferably, the amount of RAM is from about 2 kbytes in a text embodiment to about 1000 kbytes in a graphical embodiment. Preferably, the client hardware device further comprises a text input means. Most preferably, the text input means is selected from the group consisting of a keyboard connected by cable or through wireless transmission, a remote control device having either a letter or Asian character-based keypad and a selection means, or a pointing device capable of selecting letter, Asian characters or keystrokes of Asian characters on a screen, and a combination of redundant devices. Preferably, the software further comprises a means for converting screen text or pixel-based graphical images and receiving screen text or pixel-based graphical images wrapped into an ultrathin client transfer protocol for transmission via the modem.

The invention provides an ISP system for servicing MailTV client hardware components, comprising a remote applications platform server, a modem concentrator and a plurality of routers for routing across the Internet, wherein the MailTV server comprises a plurality of virtual screens in RAM, one for each client logged on at a particular time, server software, and applications software including email software and browser software. Preferably, the location of the software on the serves allows for greater ease of upgrading software. Preferably, the MailTV server is a PC having software that is able to communicate with the client device via a UTCP link and, at the same time, communicate across the Internet using standard TCP/IP.

The invention further provides an ISP network comprising an ISP provider system and a plurality of client MailTV hardware installations, wherein the ISP provider system comprises a remote applications platform server, a modem concentrator and a plurality of routers for routing across the Internet, wherein the MailTV server comprises a plurality of virtual screens in RAM, one for each client logged on at a particular time, server software, and applications software including email software and browser software, and wherein the MailTV hardware comprises:
(a) a chip having circuits providing functionality for a central processing unit (CPU), ROM, RAM, video override signals appropriate for the particular television set, and software embedded therein, wherein the software comprises connectivity software including non-connected video screens including connectivity options and setting screens, software for controlling a modem, software for accessing RAM, and pre-programmed default country options, default language options, default server telephone numbers and default guest user names; and
(b) a telephone line or a cable line modem connected to the chip to transmit and receive signals from and to the chip.

Preferably, the chip further comprises de-encryptation software that allows for changes in the programmed server telephone number to be change only upon receipt, from the server or from the client, of encrypted messages. Preferably, the amount of ROM is from about 128 kbytes in a text embodiment to about 500 kbytes in a graphical embodiment. Preferably, the amount of RAM is from about 2 kbytes in a text embodiment to about 1000 kbytes in a graphical embodiment. Preferably, the client hardware device further comprises a text input means. Most preferably, the text input means is selected from the group consisting of a keyboard connected by cable or through wireless transmission, a remote control device having either a letter or Asian character-based keypad and a selection means, or a pointing device capable of selecting letter, Asian characters or keystrokes of Asian characters on a screen, and a combination of redundant devices. In an alternative embodiment, the software further comprises a means for converting screen text or pixel-based graphical images and receiving screen text or pixel-based graphical images wrapped into an ultrathin client transfer protocol for transmission via the modem.

The present invention provides a process for providing Internet access using a client television set comprising:
(a) providing a plurality of client-located device having a standard television set, a text-input means, and circuitry communicating with the standard television set, wherein the circuitry consists essentially of functionalities a CPU (computer processing unit), ROM, RAM (random access memory), video circuitry to enable the generation of a picture, a modem and embedded software, wherein the text input means comprises means for inputting or selecting text for screen display and server communication, selected from the group consisting of a keyboard, a limited keyboard, a telephone keypad, a remote cursor moving device, and combinations thereof;
(b) providing at least one a server device, wherein the server device comprises a computer having software contained therein having memory sufficient to maintain the memory in ROM and RAM for each of the users, a virtual screen corresponding to the screen of each user logged on; and
(c) utilizing a means for transmission of data between the client-located device and the server such that the only independent memory located at the client-located device is that which is displayed on the screen of the television.

Preferably, the means for transmission of data between the client-located device and the server is a telephone line. Preferably the means for communication between the client hardware device and the server is an ultrathin client protocol (UTCP). Preferably, the TV server is a PC having software that is able to communicate with the client device via a UTCP link and, at the same time, communicate across the Internet using standard TCP/IP. Preferably, the circuit board is a digital TV controller having preprogrammed software to provide for off-line screens and a means for logging in to the server and preventing logging into another server. Most preferably, the circuit board consists of a Zilog Z89300/Z90300 design that have an on-screen display capability and an infrared (IR) remote capture register facility for communicating with a remote text input. Preferably, the server is a PC having software that is able to communicate with the client device via a UTCP link and, at the same time, communicate across the Internet using standard TCP/IP.

### Brief Description of the Drawings

Figure 1 shows a schematic of a MailTV ISP system showing the capacity to receive Internet connection signals through either an inventive client television hardware or through standard PC connections communicating in standard TCP/IP protocols.

Figure 2 shows he connectivity of the client MailTV hardware in either a set top external to the television set embodiment (lower panel) or as built in and contained within the television set embodiment (upper panel).

### Detailed Description of the Invention

The present invention provides a method for providing Internet connectivity for a client via a television set that allows for revenue generation through metering connection times or through flat rate usage. The invention creates a business model by providing Internet connectivity for clients who do not have access to a PC yet still want the connectivity and two-way communication capabilities that the Internet and particularly email capabilities provide. Other means for providing television-based connectivity, such as WebTV, provide a set-top device having the browser software and other connectivity software contained within a client's device, much like a PC. The present invention, by contrast, provides a significant lower cost device that does not contain browser software or nearly the memory capabilities to support such a stand alone device. The present invention model provides a low cost hardware means at the client television site coupled with a server means at the ISP site that creates a virtual screen within the server memory and then transmits changes to the screen to the client television set via the modem and video circuitry contained within the television set-based means. The inventive process and associated hardware at the client television set and server components and the like at an ISP (Internet Service Provider) are called "MailTV."

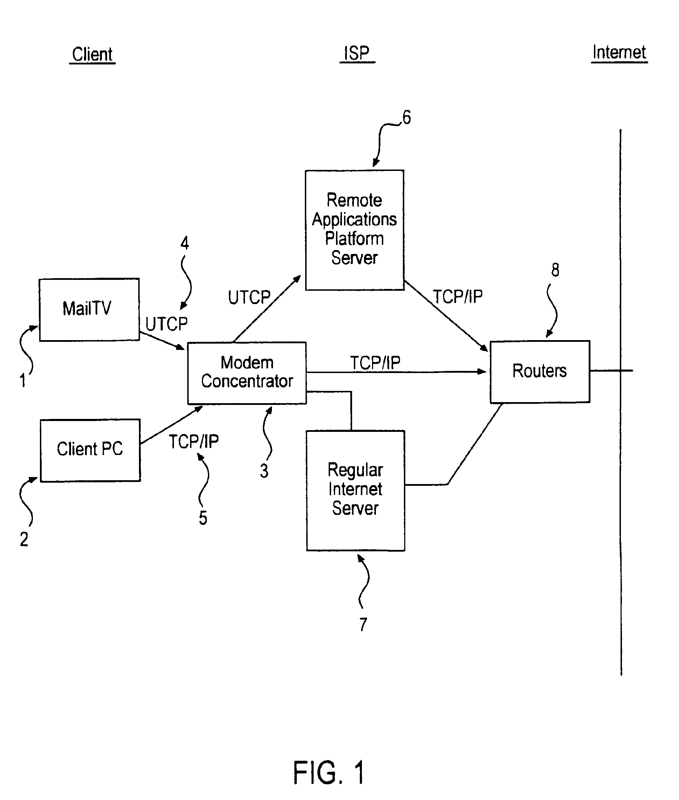

With respect to Figure 1, this shows a schematic of how an ISP can set up to receive clients who have both televisions having the client hardware 1 and PCs 2. Each client hardware component communicates with a modem concentrator 3 at the ISP by either TCP/IP 5 from the PC or by UTCP 4 from the client television hardware. The modem concentrator then send the TCP/IP signals directly to the Internet routers 8 with a regular Internet server 7 remaining in TCP/IP format. The UTCP packets are sent to a translation server 6, according to the present invention, that creates a virtual screen within its RAM for each client television hardware set connected at the time.

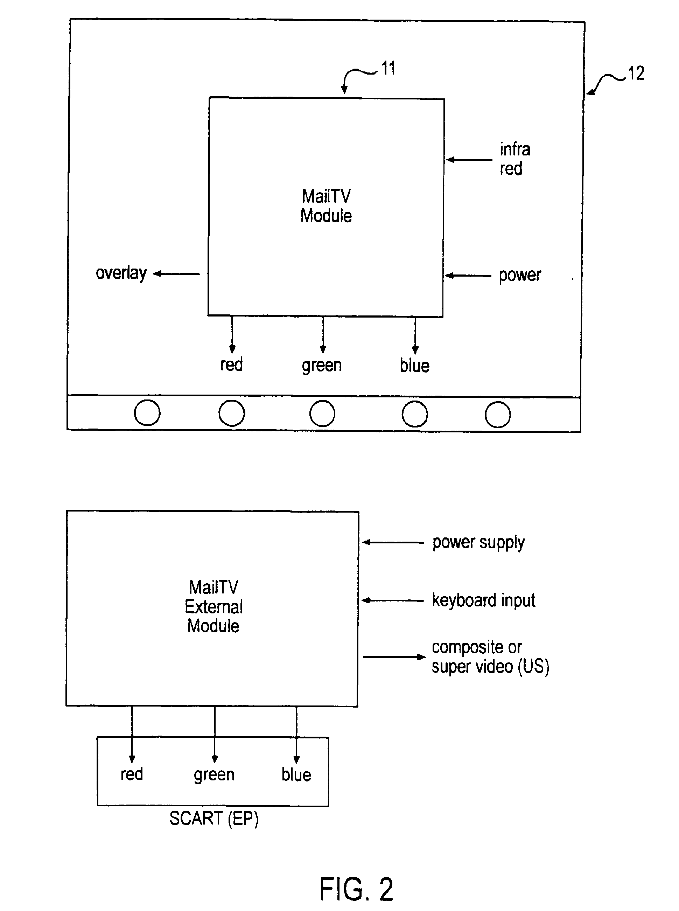

With respect to Figure 2, the top panel shows a MailTV hardware module 11 contained within a television set 12. The input signals connected to the module include an input from the user, preferably an infra red signal and power supply from the television set. The output include the video signals red, green and blue and an overlay signal for the television screen. The lower panel shows a MailTV hardware module 11 that is contained external to a television set. The inputs are a power supply and a "keyboard input" that can be in the form of a key board or remote control pointing or keypad device that communicates either by wired or wireless transmission. The outputs are a composite signal or "super video" (as used in the United States) and a colour (red, green and blue) signal output, which is called SCART in Europe.

Specifically, the inventive method comprises first providing the client a television set-based means for accessing a server through a dial-up connection, wherein the television set-based means comprises a circuit having functionality of a CPU, ROM, RAM, video circuitry and a modem, wherein the circuit further comprises de-encryption technology. The circuitry is either contained within the television set or added to existing television sets through a retrofit device or set top box that communicates with a text input device or within a keyboard (*i.e.*, text input device) that communicates with the television by providing video signals. The client-based circuitry comprises a digital TV controller chip that comprises a CPU means (computer processing unit), ROM and RAM and software embedded therein. The client-based circuitry further comprises a modem. In a preferred embodiment having text-based capabilities, the digital TV controller chip is a Zilog Z89300/Z90300 family having video on-screen display capability and integral VBI data decoding, IR (infrared) remote capture register capabilities, RGB outputs, programmable ROM and RAM. In a preferred embodiment having graphical capabilities, the digital TV controller circuitry may be contained on a single chip or on several chips, wherein the circuit comprises graphics video capabilities (as opposed to just text-based) and greater amounts of RAM. The RAM should be of sufficient size to hold at least a 640 x 480 resolution screen running 16 bits of colour which is at least 650 kbytes of memory. Larger screens or higher resolution screens will require proportionately larger RAM capacity.

Preferably, the digital TV controller chip is programmed having just enough software to allow for the client to get online. Such minimal software includes, for example, screen update commands, reading screen updates from the server including cursor and character data, and an ultrathin client protocol (UTCP) that provides just enough wrapping of a data packet so as to insure its integrity and verification by the server. The digital TV controller chip, preferably, includes a product identification number or client identification number and the telephone number to be called to reach the most local server. The telephone number of the server should, preferably, be stored in non-volatile RAM to allow the server to change this number when necessary and to allow the client to manually change this number only through manual input of encrypted data. The non-volatile RAM should further include de-encryption codes based upon the encryption codes contained in the server. The minimal software of the client circuit with a minimal use of RAM and lack of email and browser software residing thereon is what distinguishes the inventive process and allows for reduced cost of the hardware component and wider penetration of use. In view of the limited capabilities of the client hardware, the inventive process is functional in view of the CPU and memory capabilities of the server. Thus, in essence, the television screen operates as a monitor based upon the server acting as a PC connected through a telephone hook up rather than a direct cable as between the server and the television set. Therefore, there needs to be initially programmed into the client circuit initial setting including the default country, default language, default server telephone number and default guest user name. Each of the foregoing, except the default server telephone number can be changed by the client directly, without encryptation authorization codes.

In addition, there needs to be a text input device associated with the television set. This can take a wide range of forms. In the most rudimentary form, the text input device can be a pointer that allows a cursor to be moved across a visual image of a keyboard on a television screen. Another embodiment of a text input device is a standard keyboard that communicates with the television set either by wireless transmission (such as infrared signals) or through a wired cable connection.

The ISP or server element requires that the missing CPU capabilities and memory capabilities from the client set circuitry is provided by the server. Moreover, the server creates a "virtual screen" of the client's television screen in server memory. In the text-based embodiment, for example, the virtual screen in the server memory consists of a grid, such as 32 x 24 characters, with each character represented by 2 bytes. In the 2 byte representation, preferably, one byte describes colour and the other byte describes the character identification number. The server continually updates the client television screen by providing "screen update information" that tells the client circuit where to put the new character on the screen, the colour and the identity of the new character for text based applications. In the graphical embodiment, both the client circuit and the server will require more memory because the screen on the client's television and the virtual memory at the server are represented by pixels. A typical screen, for example, can be represented by 640 x 480 resolution having 307,200 pixels. At 16 bits of colour, the client circuit will require at least 614 kbytes of memory just to store the screen image. At higher resolution screens having a greater range of colours and will further require more memory used at both the server side and the client side.

The server device comprises additional memory capabilities to augment the memory capabilities and encryptation technologies, wherein the server is connected via a telephone connection to the client side modem device within the circuit by a telephone network provided by a telephone service provide.

The encryptation system provides a revenue security means by having the server control an access telephone number that is dialed by the modem means in the client's television circuitry. The encryptation system can provide for telephone number changes, changes to the carrier caused by new business relationships with telephone companies, and the possibility of new digits and area codes being added to a particular region or country. However, in those instances where the client does not use the Internet capabilities of his or her television set and later decides to utilize the capabilities, the encryptation software provides for manual input of the server telephone number. Any change to the server telephone number, either from manual input or directly from the server requires an encrypted message to change the telephone number. Encryptation technologies include, for example, an encryption code based upon the client identification number of the client side hardware coupled to a counter system that counts the number of log ins of that particular client hardware component with the server. This number is only known to the client circuit RAM and the server RAM. The encryptation uses standard encryptation software using the foregoing numerics, for example, as the basis for a secure route to the server and to be about to change telephone number of the server. Encryptation is preferably used for telephone number updating information, but not for user input information, such as credit card numbers. This is because the client is connected, via a modem, directly to the MailTV server without going across the Internet. The server can then use secure sockets to send it out across the Internet.

The business model depends upon the client hardware modem device to call the server of the ISP in order to gain Internet Access. The business model provides for revenue based upon a sharing of revenues from the telephone calls to the server. Therefore it is imperative that the telephone service provider route the calls of the hardware component to the particular ISP and avoid having the client reconfigure his or her hardware component and memory to be able to route the calls to a competing server. Moreover, in those instances where the metering of the call traffic by the telephone carrier seems to be low, the recordings of each client's usage of connection time with the server can be based upon the server records instead of those records of the telephone carrier.

The foregoing encryption will further allow for secure transmission of confidential information from the client to the server and from the server to the client. One such information is sent onto the Internet from the server, that information can go to secured sockets on the Internet.

In order to save on memory at the client hardware end, one should avoid transmitting data from the screen in standard Internet TCP/IP protocols as these tend to consume larger amounts of expensive memory. One protocol that has been developed is the UTCP or ultrathin client protocol. UTCP also wraps data packets with only 5 bytes of information, four bytes in front of the data packet and one byte after. Meanwhile, while the telephone line is connected between the client modem and the modem concentrator, the server stores a virtual image of the screen in its RAM for modification by the clients with commands that change the virtual screen image, which change is retransmitted back to the client. The server transmits changes in its virtual screen to the client in UTCP protocol. The UTCP protocol, for example, allows for a packet to have up to 16 bytes of raw data in the text embodiment. In the graphical embodiment, the packets must be larger, depending upon screen resolution characteristics.

The information sent from the client hardware to the server in the text embodiment and parts of the graphical embodiment consists of keypress commands. The effect of the keypress commands on the television screen is determined by the server software to update its virtual screen and then send screen update commands back to the client. The actual client user sees the keypress command appear on his or her screen with a slight delay. Moreover, in the graphical embodiment, there is an added element of a pointing device (*e.g*., mouse and the like) that allows the user to mover the cursor and select items on the screen. In a text embodiment, there is further a means for moving the cursor across the screen.

In order for the client to either create a message on the screen or to edit a message on the screen, the client needs to transmit information that he or she has received through a text/pointer input device. For example, to type the word "HELLO" into an edit box, the client will send the five keypresses to the server in the formof a command, such as the letter 'K' (the comand, in total, reading "KHELLO"). The server software will receive and deal with these keypresses, updating the editbox on its virtual screen accordingly (in this case by writing the wod 'HELLO' into the edit box). The server will then send screen update information back to the client; in this case sending an XY command to describe where the screen update information should be placed, followed by the command to to transfer the new screen update information (the five characters 'HELLO') onto the client screen at this location. Thus, there are two distinct types of command sent across the UTCP link: the first to send client input information to the server to be acted upon, and the second to receive the effect of such keypresses in the form of screen update information. Accordingly, with bare minimal software at the client hardware and without the need for memory intensive applications programs at the client end, the present inventive process provides a means for allowing for relatively inexpensive Internet access for a larger segment of the population.

## Claims

1. A method for providing Internet connectivity for a client via a television set that allows for revenue generation through metering connection times or through flat rate usage, comprising:
(a) providing the client a television set-based hardware component having software embedded therein for accessing a server through a dial-up connection, wherein the television set-based hardware component comprises a circuit having functionality of a CPU, ROM, RAM, video circuitry and a client modem;
(b) providing an ISP (Internet Service Provider) network comprising a server device, a modem concentrator and routers to connect to the Internet, wherein the server device comprises a central processing unit (CPU), and additional memory capabilities to augment the memory capabilities, wherein the modem concentrator is connected via a telephone connection to the client modem by a telephone network provided by a telephone service provider, and wherein the server device creates a virtual screen in its RAM memory and transmits any changes in its virtual screen to the client television set-based hardware component via the modem concentrator to the client modem;
(c) providing a revenue security means by having the server or the ISP control an access telephone number that is dialed by the modem means in the client's television circuitry; and
(d) determining client/user connection time to the server as a means for charging the client or as a means for revenue sharing with the telephone service provider.

2. The method for providing Internet connectivity for a client via a television set of claim 1, wherein the method provides a means for encryptation of the server telephone number within the memory of the client hardware component.

3. The method for providing Internet connectivity for a client via a television set of claim 2, wherein only the server can change the telephone dial up number located within each client hardware component, whereby the control of the client hardware dial up number insures that each hardware device sold will only be able to dial up the proper server so as to insure capturing the revenue stream from client interconnection time.

4. The method for providing Internet connectivity for a client via a television set of claim 2, wherein the server element contains encryptation technology and the hardware component contains de-encryptation technology in order to properly decode those signals sent from the server.

5. A client hardware device for inclusion in or attachment to a television set, comprising:
(a) a chip having circuits providing functionality for a central processing unit (CPU), ROM, RAM, video override signals appropriate for the particular television set, and software embedded therein, wherein the software comprises connectivity software including non-connected video screens including connectivity options and setting screens, software for controlling a modem, software for accessing RAM, and pre-programmed default country options, default language options, default server telephone numbers and default guest user names; and
(b) a telephone line or a cable line modem connected to the chip to transmit and receive signals from and to the chip.

6. A circuit having software embedded therein, wherein the circuit comprises a central processing unit (CPU), ROM, RAM, and video circuitry, and software embedded therein, wherein the software comprises connectivity software including non-connected video screens including connectivity options and setting screens, software for controlling a modem, software for accessing RAM, and pre-programmed default country options, default language options, default server telephone numbers and default guest user names.

7. An ISP system for servicing MailTV client hardware components, comprising a remote applications platform server, a modem concentrator and a plurality of routers for routing across the Internet, wherein the MailTV server comprises a plurality of virtual screens in RAM, one for each client logged on at a particular time, server software, and applications software including email software and browser software.

8. An ISP network comprising an ISP provider system and a plurality of client MailTV hardware installations, wherein the ISP provider system comprises a remote applications platform server, a modem concentrator and a plurality of routers for routing across the Internet, wherein the MailTV server comprises a plurality of virtual screens in RAM, one for each client logged on at a particular time, server software, and applications software including email software and browser software, and wherein the MailTV hardware comprises:
(a) a chip having circuits providing functionality for a central processing unit (CPU), ROM, RAM, video override signals appropriate for the particular television set, and software embedded therein, wherein the software comprises connectivity software including non-connected video screens including connectivity options and setting screens, software for controlling a modem, software for accessing RAM, and pre-programmed default country options, default language options, default server telephone numbers and default guest user names; and
(b) a telephone line or a cable line modem connected to the chip to transmit and receive signals from and to the chip.

9. A process for providing Internet access using a client television set comprising:
(a) providing a plurality of client-located device having a standard television set, a text-input means, and circuitry communicating with the standard television set, wherein the circuitry consists essentially of functionalities a CPU (computer processing unit), ROM, RAM (random access memory), video circuitry to enable the generation of a picture, a modem and embedded software, wherein the text input means comprises means for inputting or selecting text for screen display and server communication, selected from the group consisting of a keyboard, a limited keyboard, a telephone keypad, a remote cursor moving device, and combinations thereof;
(b) providing at least one a server device, wherein the server device comprises a computer having software contained therein having memory sufficient to maintain the memory in ROM and RAM for each of the users, a virtual screen corresponding to the screen of each user logged on; and
(c) utilizing a means for transmission of data between the client-located device and the server such that the only independent memory located at the client-located device is that which is displayed on the screen of the television.
